# EUROPEAN PATENT APPLICATION

(11) **EP 4 052 801 A1**
(43) Date of publication of application: **07.09.2022**
(21) Application number: 21160163.8
(22) Date of filing: 02.03.2021
(51) Int. Cl.: B05B 13/00, B05B 13/04, B25J 11/00, B25J 19/02, B25J 9/02

(54) **CONSTRUCTION SURFACE APPLICATION APPARATUS**

(71) Applicant: ARE23 GmbH, 82205 Gilching (DE)
(72) Inventor: Schneider, Philip, 82110 Germering (DE)
(74) Representative: Glawe, Delfs, Moll

(57) **Abstract**

The invention concerns a construction surface application apparatus (1) and a method for controlling such a construction surface application apparatus (2).

The construction surface application apparatus (1) comprises a surface application robot (2) with a limited yet sufficient number of degrees of freedom for a spray head to apply coating material to a construction surface, such as a wall. A camera module (20) is mounted in a way to be moved along with the spray head (17). In operation, the camera module (20) is moved across the surface to be coated by relying on the degrees of freedom provided by the surface application robot (2). The images taken in this step are combined to a single data representation of the surface. Based on this single data representation, a path for moving the spray head (17) is determined, preferably by using machine learning techniques, which is then used to move the spray head (17) and to apply the coating.

## Description

The invention concerns a construction surface application apparatus and a method for controlling such a construction surface application apparatus.

While autonomous or semi-autonomous robotic systems have already found their way into many technical areas, there are hardly any robotic or even semi-robotic tools available for the use on construction sites - despite there having been respective considerations for a long time.

The obstacles for introducing robotics into actual construction are manyfold and mostly relate to current restrictions of robotics. First of all, common robots usually require a precise definition of its surroundings and the objects they shall interact with in order to achieve the desired results, which is e. g. provided in production lines in factories. Furthermore, they require a certain uniformity over time in the tools they use to work on an objects, like welding tips, drills, etc. Last but not least, these robots require a sophisticated setup, which is why they are preferably used for reoccurring tasks, like welding or paint works in a production line.

Basically, none of these prerequisites generally regarded as crucial when considering utilizing a robotic system can readily be met at a construction site, due to ever changing environmental conditions, unavoidable imprecisions, deviations from the construction blueprints, and other unique requirements for each construction site.

Nevertheless, one field of construction work, past efforts for providing robotic tools have been directed to is treating surfaces of buildings, e.g. applying paint or plaster to a wall by means of robotically guiding a suitable tool along said surface, e. g. a suitable spray nozzle across a wall to be painted or plastered.

Various efforts have been spent on utilizing common six-degrees-of-freedom (6-DOF) robots as known from e. g. manufacturing plants and often referred to as robotic arms, which achieve the six degrees of freedom with solely rotary actuators swiveling rigid connections pieces relative to each other to achieve nearly any desired movement of the tip of the robotic arm in relation to its base. However, due to the complex motion patterns required by such robots in order to uniformly move a spray nozzle over a flat surface, the required programming of the robot is quite complex, especially taking into account various boundary conditions regularly occurring in the field, i. e. on a construction site. For example, the robotic arm may not collide with a room's floor, ceiling or adjacent wall, even when painting a wall up to a room corner. Furthermore, in order for a 6-DOF-robot to be able to cover a reasonable area, the individual sections of the robotic arms need to be of a certain length. However, this might make it difficult to move around the robot on a construction site, e. g. through door or window openings. Furthermore, a common 6-DOF-robot requires a safety zone to be respected even on the side opposite from the wall to be painted. Since a structural delimitation of said safety zone is not feasible for a generally mobile robot on a construction site, the 6-DOF-robot needs constant close monitoring by a skilled worker.

In order to mitigate the before mentioned problems of 6-DOF-robots, some robot designs specifically intended for the treatment of a building's wall have been conceived. For example, EP 3 626 405 A1 discloses a robot with a two dimensional frame within which a linear actuator perpendicular thereto is movable. At the tip of the linear actuator perpendicular to the frame, a tool for treating the wall of a building is to be mounted. This robot is to be placed right in front of the wall to be treated in a way that the frame is generally parallel to the wall. The tool on the tip of the additional linear actuator may then be moved over the wall in the section covered by the robot's frame in a predetermined fashion. The path for the tool to be moved along is determined based on the building's blueprints and manual input; the progress achieved may be monitored via visual information provided by a camera mounted on the robot.

Even though this robot design offers certain advantages over 6-DOF-robots described above, relying at least in part on a building's blueprints and/or manual input requires operation by specially trained personnel.

It is an object of the present invention to provide a construction surface application apparatus and a method for controlling such a construction surface application apparatus, which is easy to use and does not require specifically skilled operators.

This object is achieved by a construction surface application apparatus according to the main claim, as well as a method according to the independent claim 15. Preferred embodiments are the subject matter of the dependent claims.

Thus, the present invention concerns a construction surface application apparatus comprising a surface application robot and a robot control unit, wherein the surface application robot comprises
- a base defining a base plane, a spray head for applying coating material to a surface and a camera module,
- wherein the spray head is movable along three translational degrees of freedom by three corresponding linear actuators in relation to the base and the base plane,
- wherein the plane spanned by the third and the first degree of freedom (Z, X) is vertically orientable,
- wherein the second degree of freedom (Y) is non-parallel to the plane spanned by the first and the second degree of freedom, and
- wherein the camera module mounted in a way to be co-moved with the spray head at least along the plane spanned by the third and the first degree of freedom and whose image acquisition cone at least partly intersecting with the spraying cone of the spray head;
   wherein the robot control unit is configured to actuate the linear actuators for the three translational degrees of freedom, to switch the activation state of the spray nozzle and to evaluate the images captured by the camera module to successively
- capture the surface area generally reachable by the spray head utilizing the three degrees of freedom by moving the camera module across the plane spanned by two of the three degrees of freedom and combining the captured images to a single data representation of said surface area;
- automatically determine a path for the spray nozzle to cover all parts of the captured surface area coating material is to be applied based on the data representation; and
- move the spray head along the determined path by using the linear actuators and activate the spray head as required to apply the coating material, while constantly evaluating the images captured by the camera module to monitor the progress and to ensure proper application of the coating material.

The invention also concerns a method for controlling a construction surface application apparatus, wherein a spray head for applying a coating material to a surface and a camera module, whose image acquisition cone at least partly intersects with the spraying cone of the spray head, are jointly movable across a surface to be coated, with the steps:
- Acquiring a single data representation of a surface area by controlling the camera module to move across said surface and combine the captures images to said single data representation;
- Determine the parts of the captured surface area coating material is to be applied based on the single data representation, preferably using machine learning algorithms;
- Determine a path for the spray nozzle to cover all parts of the captured surface area coating material is to be applied based on the single data representation, preferably using machine learning algorithms; and
- Control the spray head to move along the determined path to apply the coating material where required, while constantly evaluating the images captured by the camera module to monitor the progress and to ensure proper application of the coating material.

In this specification, the degrees of freedom and the linear actuators for said degrees of freedom are equally numbered, i. e. the linear actuator for the "first" degree of freedom is the "first" linear actuator etc.

The present invention has realized that robots for applying surfaces in buildings may be generally limited to three translational degrees of freedom, thereby simplifying the controls required to move a tool across a building's surface to apply coating material thereto. The inventive construction surface application apparatus simply has to be aligned in way that the plane spanned by the third and the first degree of freedom is substantially parallel to the surface to be treated and that the distance between the apparatus and the surface is at least within predetermined limits. The fine adjustment of said distance may be e. g. done automatically by relying on the second linear actuator.

In addition, by limiting the radius of motion of the movable robotic components to a section generally corresponding to the wall section to be treated allows for a highly autonomous operation of the robot. This includes not only the actual application of the desired coating material but also the determination along which path the spray head is to be moved over the wall section or surface area in question. For this, the inventive construction surface application apparatus comprises a camera module, which may be moved across said wall section by utilizing the same actuators used for moving the spray head while the spray head itself is deactivated. The camera module is to be co-moved with the spray head at least along the plane spanned by the third and the first degree of freedom, meaning that in case the spray head is moved in a direction along said plane, the camera module is moved accordingly. Depending on where the camera module is mounted, the distance between the camera module and the wall section to be treated may also be adjusted by relying on the second linear actuator. The images captured by the camera module may then be combined with any appropriate algorithm known to a skilled person, resulting in single data representation of said surface area. These known algorithms might include image stitching. However, due to the frequently occurring uniformity of the surface to be coated, e.g. when applying a second layer of paint, image stitching algorithms might fail. In order to mitigate the problem, it is preferred that the algorithm to combine the images captured by the camera module takes into account the position of the linear actuators when each image was captured in order to simplify said combining of images. Alternatively, e.g. in case the linear actuators are not sufficiently precise, the camera module might include a positioning system providing detailed information about the position and the orientation of the camera module to facilitate the combining of the various images captured to a single data representation.

This single data representation of the surface area may then be used automatically determine a path for the spray nozzle to cover all parts of the captured surface area coating material is to be applied to. The invention has realized that due to the uniformity achieved by the surface application robot in capturing image information and the comparability of the resulting data representation of various surface areas captured by a single surface application robot over time and/or by multiple structurally identical surface application robots, the path determination may be achieved by applying artificial intelligence, especially machine learning methods, which allows the robot control unit to first automatically identify the parts of the surface area coating material is to be applied or not based on a model trained on training data and/or previous captured data representations of wall surfaces and subsequently find a suitable path for the spray head to be moved along for coating the respective identified part of the surface.

In case the surface application robot allows for an (indeed preferred) adjustment in the spray size, e.g. by adjusting the spraying pressure and/or the flow rate of the coating material), the path finding may also include determining the suitable choice of brush settings for specific sections of the path. For example, a section of the path tracing around a door or a windows may be sprayed with a thin high accurate spray (generally lower pressure and lower flow rate of the coating material), while large surface area may be sprayed with a more wide spray (generally higher pressure and higher flow rate of the coating material). For this, preferably, the path finding will thus not only comprise identifying the parts of the surface area coating material is to be applied or not, but also to determine the nature of the boundaries of said surface area to potentially apply specific requirements for accurate application of the coating material to a surface along said boundary.

Of course, a path automatically determined by the robot control unit may be presented to a user for confirmation before actually applying coating material to a surface. This is especially preferred in case such a determined path is utilized to further optimize the machine learning model, which might require a certain feedback on the validity of the identified surface areas coating material is to be applied or not and/or the path resulting therefrom. In case the path has been determined by the artificial intelligence with a degree of certainty above a predefined threshold, the user confirmation may be omitted.

At least after a release of the automatically determined path, the spray head is moved along the determined path by using the linear actuators and activated as required to apply the coating material to the determined area. Naturally, in case the determined path leads over an area of the surface no coating material is to be applied to, the spray head will be deactivated temporarily. Similarly, in case the surface application robot allows for an adjustment in the spray size, said adjustment will be performed as prescribed by the determined path.

While applying the coating material with the spray head, the camera module constantly takes images, which are evaluated to monitor the progress and to ensure proper application of the coating material. The results of these evaluations might be used to vary the speed the spray head is moved along the previously determined path and/or to control any other parameter of the material spraying actually controllable by the robot control unit, e. g. the spraying pressure, spraying velocity, material output volume, spraying width and/or overlap width. By suitably evaluating the images taken during the actual spraying process in comparison with the previously captured data representation, the robot control unit might also monitor the proper function of the linear actuators. For this image evaluation it may be, again, relied on artificial intelligence, especially machine learning, wherein a model is trained to detect various deviations in an image from a desired result and to determine suitable countermeasures.

By relying on a single data representation of the surface area captured by the apparatus itself, the inventive apparatus does not require any external source to provide information about the shape of the surface to be treated, e. g. blueprints. As a result, the exact position etc. of the inventive apparatus in relation to the surface does not need to be determined, since no comparison with e. g. blueprints are required. The required quality of the single data representation may primarily be achieved by the camera module being moved along the surface in question with a constant distance.

In a preferred embodiment, the third linear actuator in the direction perpendicular to the base plane is a single column, along which a second linear actuator is movable that allows to adjust the distance between the third linear actuator and the first linear actuator, which is mounted to the second linear actuator and extends to both sides of the third and second linear actuator. This setup of the linear actuators results in only a small footprint of the actuating system on the base. When projected onto the base plane, the movement space of the three actuators resembles a T-shape, which in comparison to a respective rectangular shape of a movement space with equal extension for other configurations (like a frame configuration as shown in EP 3 626 405 A1) allows for the base to be smaller in size or - preferably - to accommodate for additional units to be mounted in the areas not required as movement space for the linear actuators, such as material distribution unit comprising a reservoir and a pump for supplying material to the spray head, a control unit and/or a power supply.

It is preferred that the third linear actuator in the direction perpendicular to the base plane is adjustable in length to adjust the stroke length of the first linear actuator, wherein preferably a collision sensor is provided at the top the third linear actuator to avoid collision when adjusting its length. This allows the surface application robot to be adjusted in the corresponding dimension. Assuming the base plane to be horizontally aligned, this ensures the surface application robot may be used in e.g. rooms with different heights without the risk of the surface application robot colliding with the room's ceiling, as long as the rooms heights are within the extension range of the third linear actuator. The risk of collision may be further mitigated by use of a collision sensor which may be used in a way to prohibit any extending of the length of the third linear actuator in case of an impending collision.

It is preferred that the three translational degrees of freedom are perpendicular to each other. This allows for a definition of the spray head in relation to the base surface in a three-dimensional Cartesian coordinate system, which allows an intuitive calculation of control commands by the robot control unit and greatly simplifies the determination of a path for the spay head.

In a preferred embodiment, the camera module is mounted fixed in relation to the spray head, i.e. it is also co-moved with the spray head in the direction of the second degree of freedom. In the data acquisition step, this allows the camera module to be moved in a desired and/or prescribed distance to the wall surface to be captured, potentially resulting in increased quality and comparability of the data representations of various surfaces captured. During the actual application of material coating to the wall surface, the camera module is always in a distance to the wall surface directly related to the distance between the spray head and the wall, thus potentially simplifying the evaluation of the images taken during the application of coating material.

Alternatively, the camera module may be mounted on a component of the linear actuator for the second degree of freedom in an invariable distance to the first linear actuator in such a way that the spray cone of the spray head is within the cone captured by the camera module regardless of its position along the second degree of freedom. In this embodiment, the camera module is not movable in the direction of the second degree of freedom. In such an arrangement, the field of view of the camera module remains the same for the steps of capturing the surface area material coating is to be applied to and monitoring the actual spray process, independent from the spray head's position along the second degree of freedom. Even in case the spray head is moved closer to the wall surface for coating application reasons, the field of view of the camera module remains constant and usually covers a larger area that would be achievable by a camera module fixedly connected to the spray head.

The camera module is generally equipped to capture images suitable to derive a single data representation of a wall surface area therefrom. The captured images might be visual images, for which the camera module may comprise suitable image sensors. The camera module may also comprise two image sensors suitably arranged to capture stereoscopic images, which in addition to an actual picture may provide depth information using commonly known algorithms. In the alternative or in addition thereto, the camera module may comprise distance sensors, like e.g. LiDAR sensors, thermal sensors and/or surface composition sensors, whose result may influence the path and/or other parameters for applying the coating material, e. g. the temperature and composition of the surface area to be treated might require different spray parameters for a specific coating material. The alternative and/or additional sensors may also be useful for monitoring the progress of the surface treatment, e. g. measuring the thickness of a layer of plaster applied by the spray head. The camera module may also comprise light or infrared sources to illuminate the area captured. Furthermore, the camera module may be distributed, i. e. some sensors and/or light sources may be arranged distant to the other sensors of the camera module and/or on different components of the apparatus. For example, distance sensors may be mounted on both ends of the first linear actuator to determine the distance and to verify the parallelism of the apparatus to the surface to be coated.

It is preferred that the surface application robot comprises at least one sensor to determine the environmental conditions and wherein the robot control unit is configured to factor in the environmental conditions when determining the path for the spray nozzle and/or moving the spray head along the determined path. For many coating materials used in construction work, the environmental conditions, such as humidity, temperature, and/or wind speed, have an impact on the application process and/or the appearance of the surface right after the application of the coating material. In order to take this into account for the application process by the spray head and for the concurrent monitoring via the camera module, the robot control unit can rely on environmental conditions measured at the surface application robot. For example, the speed with which the spray head is moved along the determined path may have to be adjusted in relation to environmental conditions. In another example, the spray parameters might need to be adjusted resulting in a narrower spraying diameter, potentially requiring a different path to be determined than under other conditions.

In a preferred embodiment, the spray head has tilting capabilities around at least one axis, which is preferably controllable by the robot control unit. With such tilting capabilities the spray head may automatically oriented towards the wall surface to be coated in order to meet any requirements regarding the application angle for a specific coating material. In addition, the tilting capabilities might be used to achieve a desired surface effect by e. g. periodically pivoting the spray head or to apply the coating material in problematic areas like inside corners. It may also be directed upwardly to apply coating material to a ceiling.

Alternatively or in addition to a potential adjustment of the spray size by adjusting certain spray parameters like spray pressure and/or volume flow of the coating material, it is preferred that the spray head has at least two nozzle attachments that may automatically be changed by the robot control unit. This way, the robot control unit may automatically change the nozzle of the spray head for specific areas of the surface to be coated, e. g. to change the shape of the spray cone. The spray head may also be interchangeable as such for the surface application robot to be used for different coating materials requiring different spray heads and/or nozzle attachments.

In a preferred embodiment, the surface application robot comprises means for supplying coating material to the spray head. This allows for the coating material supply to be directly controlled by the robot control unit and constantly monitored. This way the monitoring of the surface application progress and the proper application of the coating material can be further enhanced. Also, the spray parameters can be easily adjusted. The means for supplying coating material might also comprise heating and/or cooling elements to regulate the temperature of the coating material to a preferred and/or prescribed level.

In a preferred embodiment, the base is configured as a mobile base, which preferably is motorized and controllable by the robot control unit, even though the mobility of the base is not utilized when capturing the surface area and automatically determine a path for the spray nozzle. Once the material application to the surface area currently coinciding with the action radius of the surface application robot is finished, the mobile base may be moved to the next section of a wall to be coated for the above-described process to be repeated. The movability of the base may also be used to automatically align the apparatus parallel to the wall surface to be coated.

As mentioned before, the robot control unit preferably applies a machine learning to various aspects of the control process, for which a machine learning module which is trained to achieve optimum surface application may be provided. Machine learning may especially be applied to determining of with areas of a wall section coating material shall be applied to, finding a suitable path for the spray head to be moved along the wall section taking into account various spray parameters and/or the monitoring of the progress by analyzing the date provided by the camera module.

It is preferred that the robot control unit is implemented as distributed system with a hardware control unit in direct connection with the surface application robot and a centralized server system for executing the more computationally demanding tasks when operating the surface application robot, preferably determining the path for the spray nozzle and/or to evaluating the images captured by the camera module to monitor the progress and to ensure proper application of the coating material. This distributed approach also elevates the possibilities to base the machine learning on the input of multiple surface application robot concurrently.

For explanation of the inventive method, which is preferably used with a construction surface application apparatus according to the present invention, it is referred to the above. The various enhancements described in connection with the inventive construction surface application apparatus also apply to the inventive method in an analogous manner.

The invention will now be described in further detail in regard to the enclosed figures. These show:
Figures 1-3: Schematic drawings of an construction surface application apparatus according to the present invention in different operating positions and views; and
Figure 4a, b: details of the construction surface application apparatus according to figures 1 to 3.

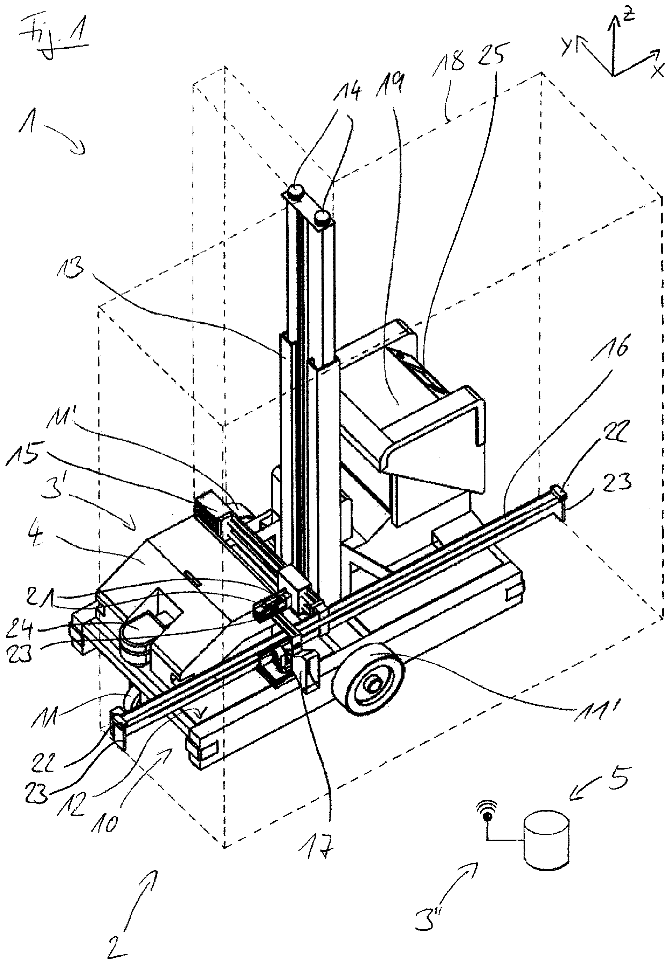

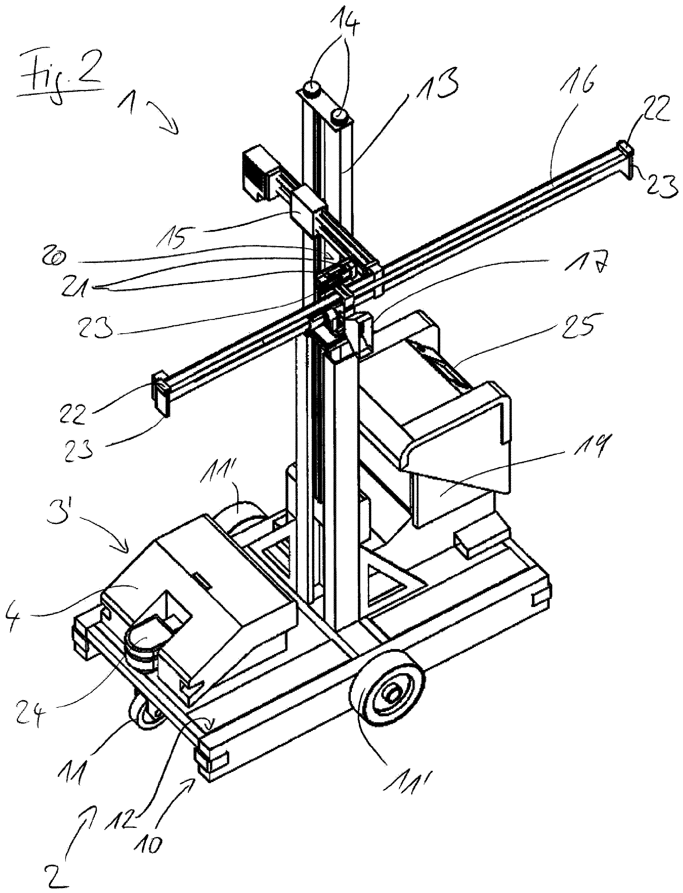

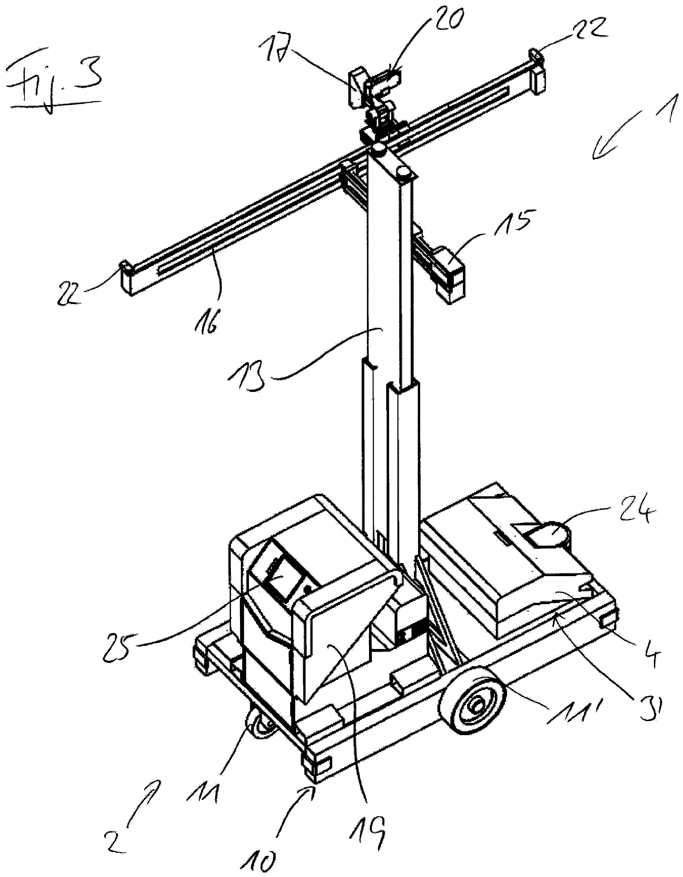

Figures 1 to 3 schematically depict a construction surface application apparatus 1 in accordance with the present invention. As can be readily seen below, this apparatus is configured to be operated in accordance with the inventive method.

The construction surface application apparatus 1 comprises a surface application robot 2 and a robot control unit 3', 3". The robot control unit 3', 3" is implemented as distributed system with a hardware control unit 4 right on the surface application robot 2 and a centralized server system 5 (only shown in Figure 1) for executing the more computationally demanding tasks when operating the surface application robot 2 as will be explained below. The two part of the robot control unit 3', 3", i.e. the hardware control unit 4 and the centralized server system 5, are connected by arbitrary network technology.

The surface application robot 2 comprises a base 10, which, in this case, is equipped with floor rollers 11, 11' and thus mobile. Two opposite floor rollers 11' are motorized and separately controllable by the robot control unit 3', 3".

The base 10 defines a base plane 12, which in the present case coincides with the even top surface of the base 10. When on level floor, the base plane 12 is typically horizontally orientated.

On said base 10, a third linear actuator 13 is mounted perpendicular to the base plane 12, i. e. arranged vertically during typical use. The third linear actuator 13 is configured as a single column which is adjustable in is length, so that its stroke length may be adjusted. On top of the third linear actuator 13, there are an ultrasonic sensor and, as a safety precaution, a contact switch provided as collision sensors 14. With the collision sensors 14, a collision with e.g. the ceiling when extending the length of the third linear actuator 13 may be avoided, wherein the ultrasonic sensor may measure the free distance to the ceiling to be observed when extending the length, while the contact switch may stop any further extension of length in case of a contact, thus providing additional safety in case of a malfunction of the ultrasonic sensor.

Along the third linear actuator 13, a second linear actuator 15 is movable the direction of a third translational degree of freedom. The second linear actuator 15 is oriented perpendicular to the third linear actuator 13 and thus, under normal operation conditions for the construction surface application apparatus 1, usually horizontal. At the end of the second linear actuator 15 and thus movable in the direction of a second degree of freedom is a first linear actuator 16, oriented perpendicular to both, the second and the third linear actuator 13, 15. Along said first linear actuator 16 and thus in the direction of a first degree of freedom, the spray head 17 of the construction surface application apparatus 1 is mounted.

By virtue of the three linear actuators 13, 15, 16, which are all controllable by the robot control unit 3', 3", the spray head 17 is laterally movable in three degrees of freedom, which coincide with a Cartesian coordinate system.

Due to the specific setup of the three linear actuators 13, 15, 16, the actuation system of the construction surface application apparatus 1 - as indicated in figure 1 with dashed lines - requires a free movement space 18 that, when projected onto the base plane 12 resembles a T-shape. This specific shape of the free movement space 18 allows components of the construction surface application apparatus 1, such as the hardware control unit 4 or a material distribution unit 19 explained below, to be mounted on top of the base 10 without interfering with or limiting the free movement space 18 of the three linear actuators 13, 15, 16.

The spray head 17 is connected to the material distribution unit 19 which provides the spray head 17 with the coating material to be applied to a surface. The material distribution unit 19 is controlled by the robot control unit 3', 3" in regard to quantity and pressure of the material to be supplied to the spray head 17. It further comprises heating elements (not shown) for keeping the coating material at a desired preset temperature.

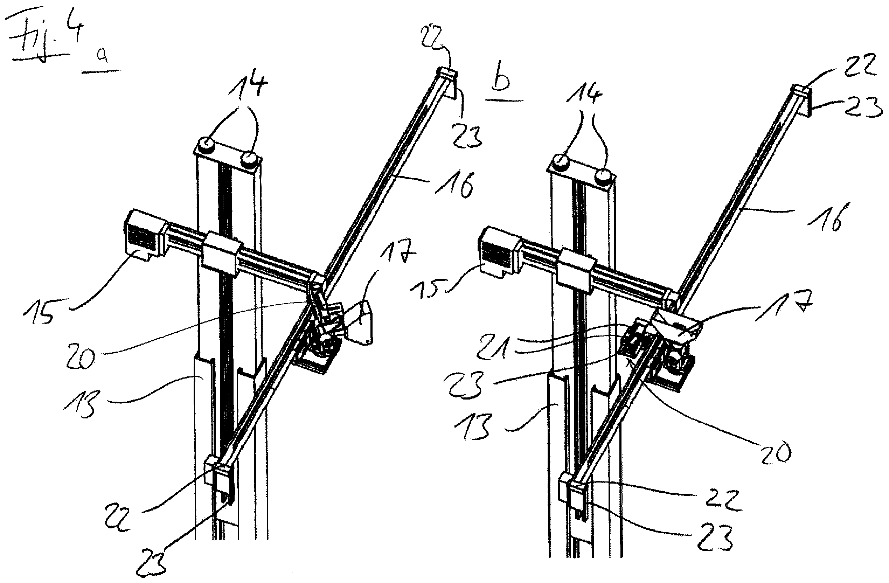

As shown in Figure 4a, b, the spray head 17 can be tilted, both in the yaw direction (cf. Figure 4a) as well as in the pitch direction (cf. Figure 4b). The latter tilting capability may be utilized to apply coating material to a ceiling. Any tilting movement of the spray head 17 is also controlled by the robot control unit 3', 3".

The spray head 17 or at least a nozzle attachment thereof is automatically (i.e. under the control of the robot control unit 3', 3") or manually interchangeable. This allows for the construction surface application apparatus 1 to be used for different coating materials (e.g. different paints and/or plaster) or tasks that e.g. might require a specific spray pattern. In principle, it is also possible to exchange the material distribution unit 19, if necessary, to allow different coating materials with different physical properties, such as paints, varnishes and plaster, to be supplied to the spray head 17.

The surface application robot 2 also comprises a distributed camera module 20 with two images sensors 21 being mounted stationary in relation to the spray head 17, thus being moved and potentially tilted together with the spray head 17 (cf. Figures 4a, b). The two image sensors 21 are spaced apart and oriented in parallel fashion to allow for extracting depth information, e. g. by using known algorithm for stereoscopic images. The image acquisition cone of the camera module 20 at least partly intersects with the spraying cone of the spray head 17. Alongside said image sensors 21, thermal sensors or surface composition sensors (not shown) may be mounted.

The camera module 20 further comprises two distance sensors 22 at the outer ends of the first linear actuator 16, which allow to determine the respective distance to a wall to be treated as well as the parallelism to said wall due to the distance between the two sensors 22.

The camera module 20 further comprises various LED lights 23 to illuminate the surface to be treated at least in the area of the recording cone(s) of those sensors of the camera module 20 that rely on light or UV reflection from the surface.

The surface application robot 2 also comprises a sensor 24 to determine environmental conditions such as temperature and humidity. This sensor 24, alike the other sensors 21, 23, provides its results to the robot control unit 3', 3".

As described, all actuators, drives and otherwise controllable components of the surface application robot 2 can be controlled by the robot control unit 3', 3", which also receives all information gathered by the various sensors 21, 22, 24. The robot control unit 3', 3" is configured to automatically apply a coating only to those areas of a surface, which are indeed meant to be coated. The configuration of this robot control unit 3', 3" is now described by way of example of a typical workflow executed by the construction surface application apparatus 1, which represents the inventive method.

After having been set up in front of a wall that is to be coated with the coating material supplied by the material distribution unit 19, the robot control unit 3', 3", usually the hardware control unit 4, first determines whether the first linear actuator 16 is properly aligned in parallel to said wall and within a suitable distance. Especially in case of a lack of parallelism the robot control unit 3', 3" may rely on the motorized floor rollers 11' to properly align the surface application robot 2. After having achieved parallelism, the motorized floor rollers 11' play no part in the actual coating of the wall surface and thus require no further consideration by the robot control unit 3', 3".

The third linear actuator 13 is then extended either until it reaches the ceiling of the room, the surface application robot 2 is located in, or it reaches its maximum length.

Afterwards, the second linear actuator 14 is used to set a predetermined distance between the wall to be coated and the camera module 20, especially the image sensors 21 of the camera module 20. After this, the part of the camera module 20 being mounted stationary in relation to the spray head 17 is moved along the wall and this in a plane spanned by the third and first degree of freedom by using the first and the third linear actuators 13, 16 in a zig-zag fashion, thereby sequentially capturing the while surface area generally reachable by the spray head 17 using only the linear actuators 13, 15, 16. The captured images as well as other data are then processed (e.g. in order to obtain depth information) and combined to result in a single data representation of said surface area. While the control of the linear actuators 13, 15, 16 and the camera module 20 might be done by the hardware control unit 4, the processing of the captured images and other data may preferably be done by the centralized server system 5.

By means of a machine learning algorithm and based on the single data representation of the surface area, the robot control unit 3', 3'' first determines those part of the surface area that should actually be coated. Next - again using a machine learning algorithm - the robot control unit 3', 3" determines a path along the spray head 17 shall be moved. In this path determination, certain parameters, like the coating material, the spray head 17 and/or nozzle attachment to be used, and/or the ambient temperature, may be considered to find a path that allows cover all the part of the surface area previously determined by spray-applying coating material. Also the spray pressure and/or the flow rate of the coating material, if adjustable, may be considered when determining the path. For example, the path may first lead along any boundary found in the single data representation, where a thin accurate strip of coating material may be applied (e.g. by using low spray pressure and a low material flow rate), before the remaining surface area may be coated with a wide spray (e.g. high spray pressure and high material flow rate).

These two step involving machine learning algorithms are preferably executed on the centralized server system 5, which - since it may be shared between multiple surface application robots 2 - usually has higher computational capacity than the hardware control unit 4. Furthermore, in case the centralized server system 5 is indeed shared between multiple surface application robots 2, the machine learning model(s) may be trained quicker since it relies on input generated by more than one robot 2 potentially working in parallel.

Once the path has been determined (and pushed from the centralized server system 5 to the surface application robot 2, if necessary), the path may be displayed to a user for approval, e.g. on the input unit 25 of the surface application robot 2. Alternatively, the approval may be provided by a central instance, e.g. at centralized server system 5, or via bidirectional communication with a handheld device of a user. In case the various machine learning algorithms show a certainty of correctness above a prescribed threshold, the step of obtaining approval from a user may be omitted.

The robot control unit 3', 3", primarily the hardware control unit 4, then controls the linear actuators 13, 15, 16 to move the spray head 17 in a distance to the wall, which has been determined during the path determination in respect to the coating material, the spray head 17 configuration and the ambient temperature, along said path. It also controls the material distribution unit 19, which ultimately allows the spray head 17 to be activated and deactivated as needed, as well as the tilting movement of the spray head 17, if required.

During the actual application of coating material to the surface, the camera module 20 constantly captures images and other data. These images and other data are constantly evaluated to monitor the progress and to ensure proper application of the coating material. In particular, the evaluation of the captured images and other data may be used to adjust the speed of the spray head 17 moving along the determined path and/or other spray parameters, e.g. as adjustable by the material distribution unit 19. This way, a proper application of the coating material can be ensured.

The image and data evaluation may also rely on a machine learning algorithm, which is preferably executed by the centralized server system 5.

Once all part of the surface area generally reachable by the spray head 17 in a given position of the surface application robot 2 are coated with the material, the surface application robot 2 may be moved to the next wall section to be coated. This may be done manually, by manually controlling the motorized floor rollers 11' or automatically by the robot control unit 3', 3" controlling the motorized floor rollers 11'.

## Claims

1. Construction surface application apparatus (1) comprising a surface application robot (2) and a robot control unit (3', 3''), wherein the surface application robot (2) comprises
- a base (10) defining a base plane (12), a spray head (17) for applying coating material to a surface and a camera module (20),
- wherein the spray head (17) is movable along three translational degrees of freedom by three corresponding linear actuators (13, 15, 16) in relation to the base (10) and the base plane (12),
- wherein the plane spanned by the third and the first degree of freedom (Z, X) is vertically orientable,
- wherein the second degree of freedom (Y) is non-parallel to the plane spanned by the first and the second degree of freedom, and
- wherein the camera module (20) mounted in a way to be co-moved with the spray head (17) at least along the plane spanned by the third and the frist degree of freedom and whose image acquisition cone at least partly intersecting with the spraying cone of the spray head (17);
wherein the robot control unit (3', 3") is configured to actuate the linear actuators (13, 15, 16) for the three translational degrees of freedom, to switch the activation state of the spray nozzle (17) and to evaluate the images captured by the camera module (20) to successively
- capture the surface area generally reachable by the spray head (17) utilizing the three degrees of freedom by moving the camera module (20) across the plane spanned by two of the three degrees of freedom and combining the captured images to a single data representation of said surface area;
- automatically determine a path for the spray nozzle to cover all parts of the captured surface area coating material is to be applied based on the single data representation; and
- move the spray head (17) along the determined path by using the linear actuators (13, 15, 16) and activate the spray head (17) as required to apply the coating material, while constantly evaluating the images captured by the camera module (20) to monitor the progress and to ensure proper application of the coating material.

2. Apparatus according to claim 1
wherein the third linear actuator (13) in the direction perpendicular to the base plane (12) is a single column, along which a second linear actuator (15) is movable that allows to adjust the distance between the third linear actuator (13) and the first linear (16) actuator, which is mounted to the second linear actuator (15) and extends to both sides of the third as well as the second linear actuator (13, 15).

3. Apparatus according to any one of the preceding claims, wherein the third linear actuator (13) in the direction perpendicular to the base plane (12) is adjustable in length to adjust the stroke length of the first linear actuator (13), wherein preferably a collision sensor (14) is provided at the top the third linear actuator (13) to avoid collision when adjusting its length.

4. Apparatus according to any one of the preceding claims, wherein the three translational degrees of freedom are perpendicular to each other.

5. Apparatus according to any one of the preceding claims, wherein the camera module (20) is mounted stationary in relation to the spray head (17).

6. Apparatus according to any one of the claims 1 to 4, wherein the camera module (20) is mounted on a component of the linear actuator for the second degree of freedom in an invariable distance to the third degree of freedom in such a way that the spray head is within the cone captured by the camera module regardless of its position along the second degree of freedom.

7. Apparatus according to any one of the preceding claims, wherein the camera module (20) comprises one or more imaging sensors (21), distance sensors (22), thermal sensors and/or surface composition sensors.

8. Apparatus according to any one of the preceding claims, wherein the surface application robot (2) comprises at least one sensor (24) to determine the environmental conditions and wherein the robot control unit (3', 3") is configured to factor in the detected environmental conditions when determining the path for the spray nozzle (17) and/or moving the spray head (17) along the determined path.

9. Apparatus according to any one of the preceding claims, wherein the spray head (17) has tilting capabilities around at least one axis, which is preferably controllable by the robot control unit (3', 3").

10. Apparatus according to any one of the preceding claims, wherein the spray head (17) has at least two nozzle attachments that may automatically be changed by the robot control unit (3', 3") and/or is manually interchangeable.

11. Apparatus according to any one of the preceding claims, wherein surface application (2) robot comprises means for supplying coating material (19) to the spray head (17), wherein said means are controlled by the robot control unit (3', 3") and preferably constantly monitored to enhance monitoring the progress and to ensure proper application of the coating material.

12. Apparatus according to any one of the preceding claims, wherein the base (10) is configured as a mobile base, which preferably is motorized and controllable by the robot control unit (3', 3"), even though the mobility of the base (10) is not utilized when capturing the surface area and automatically determine a path for the spray nozzle (17).

13. Apparatus according to any one of the preceding claims, wherein the robot control unit (3', 3") comprises a machine learning module which is trained to achieve optimum surface application.

14. Apparatus according to any one of the preceding claims, wherein the robot control unit (3', 3") is implemented as distributed system with a hardware control unit (4) in direct connection with the surface application robot (2) and a centralized server system (5) for executing the more computationally demanding tasks when operating the surface application robot (2) , preferably determining the path for the spray nozzle (17) and/or to evaluating the images captured by the camera module (20) to monitor the progress and to ensure proper application of the coating material.

15. Method for controlling a construction surface application apparatus (1), preferably in accordance with any one of the preceding claims, wherein a spray head (17) for applying a coating material to a surface and a camera module (20), whose image acquisition cone at least partly intersects with the spraying cone of the spray head (17), are jointly movable across a surface to be coated, with the steps:
- Acquiring a single data representation of a surface area by controlling the camera module (20) to move across said surface and combine the captures images to said single data representation;
- Determine the parts of the captured surface area coating material is to be applied based on the single data representation, preferably using machine learning algorithms;
- Determine a path for the spray nozzle (17) to cover all parts of the captured surface area coating material is to be applied based on the single data representation, preferably using machine learning algorithms; and
- Control the spray head (17) to move along the determined path to apply the coating material where required, while constantly evaluating the images captured by the camera module (20) to monitor the progress and to ensure proper application of the coating material.
